Europäisches Patentamt

European Patent Office

Office européen des brevets

(19)

(11) Numéro de publication: **0 254 215**
**B1**

(12) **FASCICULE DE BREVET EUROPEEN**

(45) Date de publication du fascicule du brevet: **23.01.91**

(51) Int. Cl.⁵: **H 02 P 6/02, A 61 C 1/00**

(21) Numéro de dépôt: **87110313.1**

(22) Date de dépôt: **16.07.87**

(54) **Dispositif d'entraînement électrique pour pièce à main chirurgicale, notamment dentaire.**

(30) Priorité: **23.07.86 CH 2944/86**

(43) Date de publication de la demande:
**27.01.88 Bulletin 88/04**

(45) Mention de la délivrance du brevet:
**23.01.91 Bulletin 91/04**

(84) Etats contractants désignés:
**AT DE FR GB IT NL SE**

(56) Documents cités:
**EP-A-0 157 305**
**DE-A-2 315 121**
**FR-A-2 397 180**
**FR-A-2 443 761**
**US-A-4 338 556**

(73) Titulaire: **BIEN-AIR SA
Länggasse 60
CH-2504 Bienne (CH)**

(72) Inventeur: **Hetzel, Max
Jurastrasse 563
CH-4707 Deitingen (CH)**
Inventeur: **Mosimann, Vincent
Chemin des Grillons 13-15
CH-2500 Bienne 6 (CH)**

(74) Mandataire: **Ebbinghaus, Dieter et al
v. FÜNER, EBBINGHAUS, FINCK Patentanwälte
European Patent Attorneys Mariahilfplatz 2 & 3
D-8000 München 90 (DE)**

Courier Press, Leamington Spa, England.

**Description**

La présente invention concerne un dispositif d'entraînement pour pièce à main de chirurgie, notamment dentaire, destiné à mettre en rotation rapide un outil, tel qu'une fraise. Elle concerne plus particulièrement un dispositif d'entraînement utilisant un moteur électrique rotatif.

De tels dispositifs sont bien connus et dans les réalisations existantes ils comprennent une alimentation fixe et un moteur à collecteur disposé dans la pièce à main, l'alimentation et le moteur étant reliés par un cable souple à deux conducteurs. L'alimentation fournit une tension réglable, par exemple à l'aide d'une pédale, permettant au praticien qui utilise la pièce à main de varier à volonté la vitesse de rotation du moteur et donc de l'outil qu'il entraîne.

Or, quoique déjà connu du document EP-A-157305, l'utilisation d'un moteur à collecteur dans une pièce à main dentaire présente certains inconvénients, que le moteur soit du type à courant continu ou à courant alternatif.

En effet, d'une part, étant donné que la vitesse de rotation du moteur est élevée, pouvant dépasser 100 000 tours par minute, l'usure du collecteur est importante. D'autre part, le moteur fonctionnant dans un environnement humide qui contient en suspension les résidus du fraisage, il est impossible d'éviter, malgré les dispositifs d'étanchéité, la détérioration du collecteur résultant de la condensation et du dépôt de corps étrangers sur sa surface. Enfin si le praticien utilise des produits volatils, les étincelles produites par le collecteur peuvent entraîner des explosions locales.

Des moteurs à courant continu sans collecteur ne présentant pas ces inconvénients sont également connus. Ce sont des moteurs qui ont un stator comportant généralement trois enroulements connectés en triangle ou en étoile, et un rotor aimanté. Les enroulements sont excités par un circuit électronique qui est commandé par la position du rotor à l'aide de trois capteurs fixes sur le moteur. Une réalisation d'un tel moteur pour une application industrielle est par exemple décrite dans le brevet US 4 338 556.

Les trois enroulements du stator et les trois capteurs compliquent bien entendu les liaisons électriques. Ainsi un moteur de ce type nécessite au minimum 8 fils de connexion, à savoir 3 fils pour les enroulements, 3 fils pour les capteurs et 2 fils pour alimenter les capteurs. Ces 8 fils forment un cable qui présente l'inconvénient d'être plus encombrant, plus rigide et moins fiable qu'un cable à deux fils.

Or ces inconvénients sont pariculièrement gênants dans le cas d'une pièce à main dentaire dont les déplacements, tout en sollicitant beaucoup le cable, doivent subir de sa part le moins d'entrave possible.

La présente invention se propose de pallier ces inconvénients en réalisant un dispositif d'entraînement par moteur électrique sans collecteur pour pièce à main dans lequel la liaison électrique avec cette pièce à main est obtenue à l'aide d'un cable souple et fiable à deux fils.

Cet objectif est etteint frâce aux caractéristiques des revendications 1, 8 et 10.

A côté de la souplesse et de la fiabilité de la liaison électrique entre l'alimentation et la pièce à main que procure le dispositif selon l'invention, il présente encore l'avantage que cette liaison reste compatible avec une pièce à main munie d'un moteur à collecteur. Il suffit dans ce cas de supprimer la tension haute fréquence pour n'alimenter le moteur qu'avec la tension continue.

D'autres caractéristiques et avantages de la présente invention ressortiront de la description qui va suivre, faite en regard du dessin annexé et donnant, à titre explicatif mais nullement limitatif, une forme de ·réalisation d'un tel dispositif d'entraînement pour pièce à main. Sur ce dessin, où les mêmes références se rapportent à des éléments analogues:

la fig. 1 représente le schéma d'une forme de réalisation de l'alimentation selon l'invention; et

la fig. 2 représente le schéma d'une forme de réalisation des circuits associés au moteur, ces circuits et le moteur étant disposés dans la pièce à main selon l'invention et reliés à l'alimentation par deux conducteurs électriques.

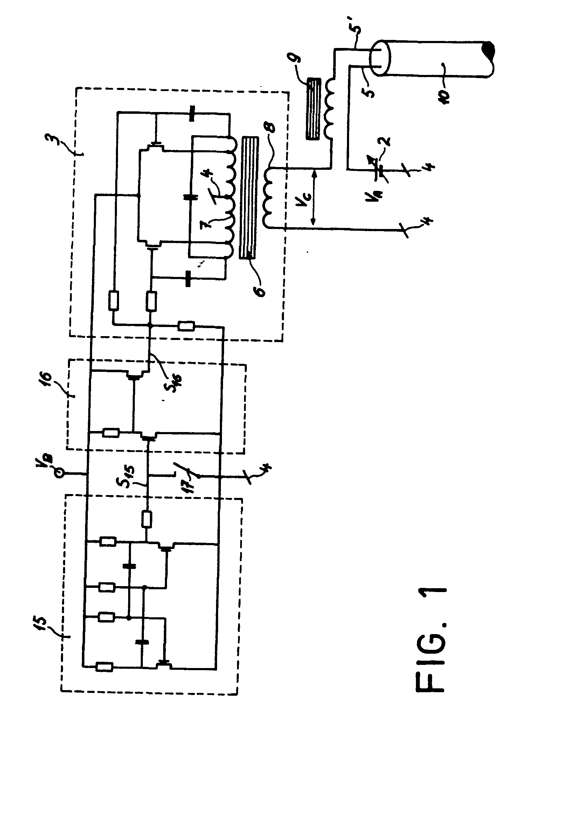

Le schéma d'un exemple de réalisation d'une alimentation selon l'invention, référencée 1, est représenté sur la fig. 1. Cette alimentation se compose essentiellement d'une source de tension continue 2 et d'un générateur haute fréquence 3. La source est reliée au réseau et fournit une tension continue $V_A$. Elle peut avantageusement comporter un organe de commande non représenté, par exemple une pédale, permettant de varier la tension, typiquement entre 0 et 24 volts. Un pôle de la source 2, par exemple le pôle négatif, est relié à une borne de masse 4 de l'alimentation 1, alors que l'autre pôle est connecté à une extrémité d'un conducteur électrique souple 5.

Le générateur 3 comporte un transformateur 6 au primaire 7 duquel est connecté un circuit électronique oscillateur, connu en soi, qui ne sera pas décrit. Une source non représentée fournit une tension d'alimentation $V_B$ au circuit oscillateur qui produit aux bornes du secondaire 8 du transformateur une tension alternative $V_C$ ayant une fréquence de 2 MHZ et une amplitude d'environ 1 volt. Une extrémité du secondaire est reliée à la borne de masse 4, alors que l'autre extrémité est connectée à une extrémité d'un deuxième conducteur électrique souple 5' à travers une self 9. Les conducteurs 5 et 5' sont réunis à l'intérieur d'un cable 10 sortant de l'alimentation 1. La self ne joue pas un rôle essentiel dans le dispositif selon l'invention. Son utilité sera expliquée plus loin et en attendant elle peut être ignorée.

L'alimentation 1 comporte encore avantageusement un oscillateur basse fréquence 15 et un circuit de modulation 16, les deux circuits étant alimentés par la source fournissant la tension $V_B$. L'oscillateur est par exemple un flip-flop assymétrique, qui ne sera pas décrit étant connu de l'art antérieur, délivrant un signal périodique basse fréquence $S_{15}$ formé de brèves impulsions positives, la durée de chaque impulsion étant

EP 0 254 215 B1

égale à 10% de la période de ce signal. Le circuit 16 est, de son côté, essentiellement un amplificateur non-linéaire connu en soi formé par exemple de deux transistors connectés en cascade. Ce circuit reçoit le signal $S_{15}$ et délivre un signal $S_{16}$ d'énergie suffisante au générateur 3 pour moduler en amplitude, par tout ou rien, de manière également connue, la tension haute fréquence par le signal basse fréquence. La modulation est réalisée de façon que l'oscillation haute fréquence cesse pendant les impulsions du signal $S_{15}$, cette tension haute fréquence prenant ainsi la forme d'une oscillation périodiquement interrompue durant de brefs instants.

Entre la sortie de l'oscillateur 15 et la masse 4 est encore disposé un contact 17. En position ouverte ce contact n'a aucun effet alors qu'en position fermée il met la sortie de l'oscillateur 15 à la masse. Ainsi dans une position du contact 17 la tension haute fréquence est modulée en amplitude par le signal basse fréquence, et dans l'autre position de ce contact la modulation est supprimée, ce qui peut aussi être considéré comme étant une modulation d'amplitude nulle. A chaque position du contact 17 correspond donc un mode de modulation particulier.

Au lieu d'être modulée en amplitude par les moyens qui viennent d'être décrits, la tension haute fréquence pourrait bien entendu être modulée de manière différente, par exemple en fréquence, sans sortir du cadre de l'invention, pourvu qu'à une position du contact 17 corresponde un mode de modulation et à l'autre position du contact un autre mode de modulation.

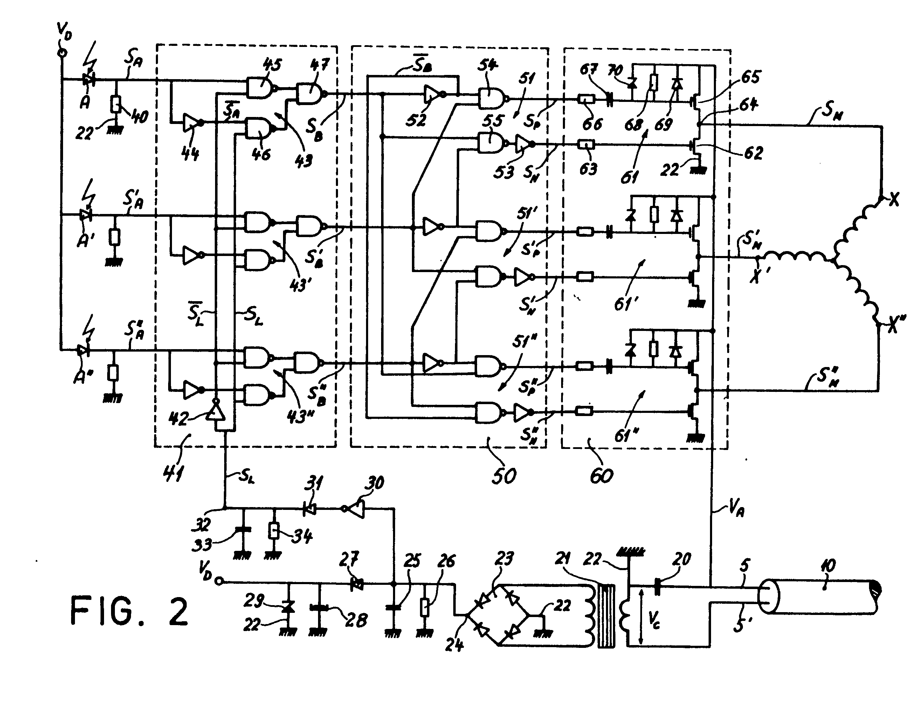

Entre les conducteurs 5 et 5' apparaît une tension égale à la superposition, ou à la somme, des tensions $V_A$ et $V_C$. Cette tension est transmise par le cable 10 jusqu'à la pièce à main dont le schéma des circuits est représenté sur la fig. 2.

Le conducteur 5 est connecté, sur la pièce à main, à une borne d'un condensateur de découplage 20, et le conducteur 5' à une extrémité du primaire d'un transformateur 21 élévateur de tension. L'autre extrémité du primaire est reliée à une borne de masse 22 de la pièce à main, à laquelle est connectée également l'autre borne du condensateur 20. La tension continue $V_A$ apparaît alors aux bornes de ce condensateur et la tension haute fréquence $V_C$ aux bornes du secondaire du transformateur 21. Les bornes de masse 4 et 22 sont liées galvaniquement et se trouvent pratiquement au même potentiel continu et alternatif.

Le secondaire du transformateur 21 est connecté aux bornes d'entrée d'un redresseur en pont 23. Une borne de sortie de ce pont est reliée à la borne de masse 22. Entre l'autre borne de sortie, référencée 24, et cette masse apparaît alors une tension haute fréquence redressée ayant une amplitude d'environ 10 $V_C$, soit typiquement 15 volts crête à crête. Lorsque le contact 17 est ouvert, cette tension disparaît bien entendu pendant les impulsions du signal basse fréquence $S_{15}$.

Un filtre, composé d'un condensateur 25 et d'une résistance 26, chaque élément étant disposé entre la masse 22 et la borne 24, élimine la composante haute fréquence du signal délivré par le redresseur en pont 23. Suivant que le contact 17 est fermé ou ouvert, la tension sur la borne 24 est ainsi soit continue, soit complémentaire du signal basse fréquence $S_{15}$.

Un redresseur 27, relié à la borne 24, fournit une tension d'alimentation continue $V_D$ pour les circuits électroniques de la pièce à main, cette tension étant filtrée par un condensateur 28 et stabilisée par une diode Zener 29. L'entrée d'un inverseur 30 est encore connectée à la borne 24, la sortie de cet inverseur délivrant soit une tension nulle, lorsque le contact 17 est fermé, soit une tension de forme identique au signal $S_{15}$, lorsque le contact est ouvert. Enfin, une borne d'un redresseur 31 est connectée à la sortie de l'inverseur 30 pour fournir sur l'autre borne 32, à laquelle est relié un filtre composé d'un condensateur de filtrage 33 et d'une résistance 34 connectés en parallèle entre cette borne et la borne de masse 22, un signal logique $S_L$. Ce signal se trouve au niveau logique bas, désigné aussi par "0", lorsque le contact 17 est fermé, et au niveau logique haut, désigné aussi par "1", lorsque ce contact est ouvert.

Dans la pièce à main est disposé un moteur triphasé non représenté dont l'enroulement du stator est connecté en étoile entre les bornes de sortie X, X' et X''. Le rotor, de son côté, comporte un aimant permanent dont les pôles sont diamétralement opposés par rapport à l'axe de rotation du moteur. L'application de signaux convenables sur les bornes X, X' et X'' permettent de créer dans le stator un champ magnétique tournant, ce champ ayant pour effet d'entraîner en synchronisme le rotor.

Le circuit électronique disposé dans la pièce à main, et qui sera décrit maintenant, a pour but de créer ces signaux. Bien entendu un moteur dont l'enroulement serait connecté en triangle ou qui comporterait un nombre de phases différent de trois, ne sortirait pas du cadre de la présente invention car le circuit électronique ne devrait subir que des modifications peu importantes, à la portée de l'homme du métier.

Trois capteurs, référencés respectivement A, A', A'', sont disposés dans la pièce à main suivant un cercle centré sur l'axe de rotation du moteur. Les capteurs sont fixes par rapport au stator et décalés les uns des autres de 120° sur ce cercle. Préférentiellement les capteurs sont du type photoélectrique, par exemple des phototransistors. Dans ce cas à chaque capteur est associée une source de lumière permanente non représentée pour l'éclairer. Bien entendu d'autres capteurs, tels que des cellules à effet Hall, pourraient aussi être utilisés. Une borne du capteur A est connectée à l'alimentation fournissant la tension $V_D$. L'autre borne de ce capteur est reliée à la masse 22 à travers une résistance de charge 40, aux bornes de laquelle apparaît un signal logique $S_A$, produit éventuellement par un circuit d'interface non représenté. Le signal $S_A$ se trouve au niveau logique bas lorsque le capteur A n'est pas activé, et au niveau logique haut quand le capteur est activé. Les capteurs A' et A'' sont connectés de manière identique au capteur A et fournissent respectivement les signaux logiques $S'_A$ et $S''_A$.

Les capteurs sont commandés, en supposant que ce sont des phototransistors, par un disque opaque

3

en forme de demi-cercle, solidaire du rotor, disposé entre les capteurs et les sources de lumière. Dans ces conditions, suivant la position angulaire du disque, il y aura toujours 1 capteur éclairé, c'est-à-dire activé, et 2 capteurs obstrués, ou inversément. L'état des capteurs délimite 6 zones angulaires consécutives, notées $Z_1, Z_2 ... Z_6$, permettant de déterminer la position du rotor avec une précision de 60°. Chaque zone $Z_i$ (i = 1 à 6) est par conséquent définie par l'état logique des signaux $S_A$, $S'_A$ et $S''_A$, ce qui sera noté par $Z_i$ ($S_A$, $S'_A$, $S''_A$). Ainsi, à un sens de rotation donné, il correspondra par exemple l'ordre de succession des zones suivant: $Z_1$ (100), $Z_2$ (110), $Z_3$ (010), $Z_4$ (011), $Z_5$ (001), $Z_6$ (101). Pour l'autre sens de rotation l'ordre de succession des zones sera bien entendu inverse.

Les signaux $S_A$, $S'_A$ et $S''_A$ sont appliqués à un circuit logique d'inversion 41 qui reçoit en outre le signal $S_L$. Le circuit 41 comprend un inverseur 42 à l'entrée duquel est appliqué le signal $S_L$, et trois cellules identiques, référencées 43, 43' et 43'', recevant respectivement les signaux $S_A$, $S'_A$ et $S''_A$. Seule la cellule 43 sera décrite. Elle comprend un inverseur 44 et trois portes NON-ET ou NAND à deux entrées, référencées 45, 46 et 47. Le signal $S_A$ est appliqué à l'entrée de l'inverseur 44 et à une entrée de la porte 45 dont la sortie est reliée à une entrée de la porte 47. La sortie de l'inverseur 44, qui fournit un signal $\overline{S}_A$ inverse du signal $S_A$, est connectée à une entrée de la porte 46 dont la sortie est reliée à l'autre entrée de la porte 47. Enfin l'autre entrée de la porte 46 reçoit le signal $S_L$ alors que l'autre entrée de la porte 45 est reliée à la sortie de l'inverseur 42 pour recevoir le signal $\overline{S}_L$ inverse du signal $S_L$. La sortie de la porte 47 délivre un signal $S_B$, et les sorties des cellules 43' et 43'' respectivement un signal $S'_B$ et un signal $S''_B$.

Lorsque le signal $S_L$ se trouve au niveau logique bas, un niveau logique haut apparaît à la sortie de la porte 46, quel que soit le niveau à la sortie de l'inverseur 44. La sortie de l'inverseur 42 étant au niveau logique haut, la porte 45 délivre à sa sortie un signal $\overline{S}_A$ inverse du signal $S_A$, et la porte 47 un signal inverse du signal $\overline{S}_A$, c'est-à dire qu'elle restitue le signal $S_A$. Donc $S_B = S_A$ si $S_L = 0$. Le circuit 41 ne produit dans ce cas aucune modification du signal $S_A$.

Par contre, un niveau logique haut du signal $S_L$ produit à la sortie de la porte 47 un signal inverse du signal $S_A$. Donc $S_B = \overline{S}_A$ si $S_L = 1$.

Bien entendu le même raisonnement s'applique aux cellules 43' et 43''. Il en résulte que le circuit 41 fournit à sa sortie des signaux identiques aux signaux des capteurs A, A', A'' lorsque $S_L = 0$, et des signaux inverses lorsque $S_L = 1$.

Les signaux $S_B$, $S'_B$ et $S''_B$ sont appliqués à leur tour à un circuit logique de commande 50. Ce circuit comprend trois cellules identiques, référencées 51, 51' et 51''. Seule la cellule 51 sera décrite. Elle comprend deux inverseurs, référencés 52 et 53, et deux portes NON-ET ou NAND à deux entrées, référencées 54 et 55. Le signal $S_B$ est appliqué à l'entrée de l'inverseur 52 et à une entrée de la porte 55. Une entrée de la porte 54 est reliée à la sortie de l'inverseur 52 alors que l'autre entrée de cette porte reçoit le signal $S'_B$. L'autre entrée de la porte 55 reçoit un signal $\overline{S}_B$ inverse du signal $S_B$, obtenu à la sortie d'un inverseur 52' de la cellule 51', équivalent à l'inverseur 52 de la cellule 51. La sortie de la porte 54 fournit un signal logique $S_P$, tandis que la sortie de la porte 55 est reliée à l'entrée de l'inverseur 53 qui fournit à sa sortie un signal logique $S_N$.

De même la cellule 51' reçoit les signaux $S'_B$, $S''_B$ et $\overline{S}''_B$ pour délivrer les signaux $S'_P$ et $S'_N$, et la cellule 51'' les signaux $S''_B$, $S_B$ et $\overline{S}_B$, pour délivrer les signaux $S''_P$ et $S''_N$.

Les signaux de sortie du circuit de commande 50 sont enfin appliqués à l'entrée d'un circuit d'attaque ou driver 60. Ce circuit comprend trois cellules identiques, référencées 61, 61' et 61'', dont seule la première sera décrite. Dans cette cellule 61 figure un transistor de puissance MOS 62 du type N dont la source est reliée à la masse 22 et la grille à la sortie de l'inverseur 53 à travers une résistance de protection 63 pour recevoir le signal $S_N$. Le drain du transistor 62 est connecté en un point 64 au drain d'un transistor de puissance 65 du type P dont la source reçoit la tension d'alimentation $V_A$ et la grille le signal $S_P$ à travers une résistance de protection 66 et un condensateur de couplage 67. La grille et la source du transistor 65 sont en outre reliées l'une à l'autre, d'une part, par une résistance 68 qui définit le point de travail de ce transistor et, d'autre part, par une diode 69 et une diode Zener 70 qui limitent l'amplitude du signal sur la grille.

En réponse aux signaux $S_N$ et $S_P$, qui peuvent éventuellement être adaptés au circuit 60 au moyen d'un circuit d'interface non représenté, la cellule 61 délivre sur le point 64 un signal moteur $S_M$ qui est appliqué sur la borne X de l'enroulement du stator. De même les cellules 61' et 61'' délivrent respectivement des signaux $S'_M$ et $S''_M$, le premier étant appliqué sur la borne X' et le deuxième sur la borne X''.

Suivant les niveaux des signaux $S_N$ et $S_P$, le point 64 de la cellule 61 peut se trouver dans trois états différents. Si $S_N = S_P = 0$, le transistor 62 est bloqué et le transistor 65 saturé. La tension du point 64 est alors égale à $V_A$. Ainsi dans ce cas $S_M = V_A$. Si $S_N = S_P = 1$, le transistor 62 est saturé et le transistor 65 bloqué. Dans ces conditions la tension du point 64 est nulle et $S_M = 0$. Enfin si $S_N = 0$ et $S_P = 1$, les deux transistors sont bloqués. L'impédance vue du point 64 est alors infinie et la tension du point 64 indéterminée, ce qui sera noté par $V_M = ?$. Aucun courant ne peut circuler dans ce cas entre le point 64 et la borne X. Il reste encore la possibilité $S_N = 1$ et $S_P = 0$, entraînant la saturation simultanée des deux transistors et le court-circuit de l'alimentation fournissant la tension $V_A$. Ceci correspond à un état défendu qui ne peut se produire avec les circuits décrits dans aucune des zones angulaires Zi (i = 1 à 6). Bien entendu ce qui vient d'être dit de la cellule 61 est aussi valable pour les cellules 61' et 61'' qui fournissent respectivement les signaux $S'_M$ et $S''_M$.

A chaque zone angulaire $Z_i$ correspondent des états bien définis des signaux de sortie des circuits 41, 50 et 60 qui viennent d'être décrits. Le tableau suivant donne les états de ces signaux, dans le cas $S_L = 0$, en fonction des états des signaux $S_A$, $S'_A$, $S''_A$.

| $S_L=0$ | $S_A$ | $S'_A$ | $S''_A$ | $S_B$ | $S'_B$ | $S''_B$ | $S_N$ | $S_P$ | $S'_N$ | $S'_P$ | $S''_N$ | $S''_P$ | $S_M$ | $S'_M$ | $S''_M$ |
|---|---|---|---|---|---|---|---|---|---|---|---|---|---|---|---|
| $z_1$ | 1 | 0 | 0 | 1 | 0 | 0 | 1 | 1 | 0 | 1 | 0 | 0 | 0 | ? | $V_A$ |
| $z_2$ | 1 | 1 | 0 | 1 | 1 | 0 | 0 | 1 | 1 | 1 | 0 | 0 | ? | 0 | $V_A$ |
| $z_3$ | 0 | 1 | 0 | 0 | 1 | 0 | 0 | 0 | 1 | 1 | 0 | 1 | $V_A$ | 0 | ? |
| $z_4$ | 0 | 1 | 1 | 0 | 1 | 1 | 0 | 0 | 0 | 1 | 1 | 1 | $V_A$ | ? | 0 |
| $z_5$ | 0 | 0 | 1 | 0 | 0 | 1 | 0 | 1 | 0 | 0 | 1 | 1 | ? | $V_A$ | 0 |
| $z_6$ | 1 | 0 | 1 | 1 | 0 | 1 | 1 | 1 | 0 | 0 | 0 | 1 | 0 | $V_A$ | ? |

A une zone angulaire $Z_i$ donnée correspond un seul courant dans l'enroulement moteur, ce courant circulant de la borne portée à la tension $V_A$ vers la borne se trouvant à la tension nulle. Ce courant engendre dans le stator un champ magnétique radial. En passant d'une zone $Z_i$ à la suivante, le champ magnétique tourne de 60°.

L'ensemble des signaux $S_M$, $S'_M$, $S''_M$ forme donc un signal triphasé produisant dans le stator du moteur un champ magnétique tournant. Le sens de rotation du champ dépend de l'ordre de succession des zones angulaires $Z_i$. Cet ordre, et finalement le sens de rotation du moteur, est déterminé par la direction du couple exercé par le champ magnétique tournant sur le rotor.

Dans le cas $S_L = 1$, les signaux $S_B$, $S'_B$, $S''_B$ sont des signaux inverses respectivement des signaux $S_A$, $S'_A$, $S''_A$. Ceci entraîne, dans chaque ligne du tableau précédent, une inversion des signaux $S_N$ .... $S''_P$ et une permutation entre les valeurs 0 et $V_A$ des signaux $S_M$, $S'_M$, $S''_M$. Il s'ensuit que, dans ce cas, pour chaque zone angulaire $Z_i$, le courant qui circule dans l'enroulement est de sens opposé à celui qui circule lorsque $S_L = 0$. Par conséquent la direction du champ magnétique tournant et la direction du couple qu'il exerce sur le rotor sont aussi opposées dans les deux cas. Il en résulte finalement que, si le moteur tourne dans un sens alors que le contact 17 est fermé et $S_L = 0$, il tournera dans le sens inverse une fois le contact ouvert et $S_L = 1$.

La vitesse de rotation du moteur est essentiellement déterminée par la tension $V_A$ de la source de tension 2, tout au moins lorsque la charge sur le moteur est faible. En variant cette tension, par exemple à l'aide d'une pédale, il est possible d'adapter la vitesse du moteur au travail effectué, et même de l'arrêter en annulant $V_A$.

Le courant continu fourni par la source 2 à l'enroulement du stator dépend du couple résistant appliqué au moteur. Lorsque le moteur est fortement chargé ce courant peut atteindre plusieurs ampères et saturer le circuit magnétique de faible dimension du transformateur 21 dont il traverse le primaire. Cette saturation provoque une baisse de la tension haute fréquence $V_C$ aux bornes du secondaire de ce transformateur. La self 9, qui est traversée par le même courant, a pour but de compenser cette baisse de tension. A cet effet, elle comporte un circuit magnétique saturable qui provoque une diminution de son impédance lorsque le courant continu qui le traverse augmente. Il en résulte un accroissement du courant haute fréquence dans les conducteurs 5, 5' en fonction de la charge du moteur, cet accroissement venant compenser les effets de la saturation du transformateur 21 pour rendre la tension haute fréquence aux bornes de son secondaire sensiblement constante.

**Revendications**

1. Dispositif d'entraînement électrique destiné à mettre en rotation un outil, comprenant une alimentation (1) fournissant une tension continue ($V_A$), une pièce à main, notamment dentaire, dans laquelle est disposé un moteur électrique pour entraîner l'outil, et deux conducteurs électriques (5, 5') déformables reliant l'alimentation à la pièce à main pour alimenter le moteur, caractérisé en ce que:

l'alimentation (1) comprend en outre un générateur haute fréquence (3) fournissant une tension haute fréquence ($V_C$), et des moyens (6) pour sommer la tension haute fréquence à la tension continue ($V_A$) et appliquer le tension résultonte aux deux conducteurs;

le moteur est un moteur multiphasé sans collecteur comportant un rotor aimanté; et en ce que

la pièce à main comprend en outre des moyens (20, 21) connectés aux deux conducteurs électriques (5, 5') pour séparer la tension continue de la tension haute fréquence, des capteurs (A, A', A'') commandés par le rotor et fournissant des signaux logiques ($S_A$, $S'_A$, $S''_A$) représentatifs de la position angulaire du rotor, un circuit logique de commande (50) fournissant des signaux de commande ($S_N$, $S_P$, ... $S''_N$, $S''_P$) en réponse aux signaux logiques délivrés par les capteurs, un circuit d'attaque (60) du moteur recevant les signaux de commande et la tension continue et fournissant un signal multiphasé ($S_M$, $S'_M$, $S''_M$) aux bornes (X, X', X'') du moteur pour le mettre en rotation, et un circuit redresseur (23, 25, 26, 27, 28, 29) recevant la tension haute fréquence et fournissant une tension d'alimentation continue (V_D) aux capteurs et aux circuits logique de commande et d'attaque.

2. Dispositif selon la revendication 1, caractérisé en ce que:

l'alimentation comprend en outre des moyens (15, 16) pour moduler la tension haute fréquence (V_C), et un organe de commutation (17) commandant la modulation, ledit organe pouvant se trouver dans deux états, un premier mode de modulation correspondant à l'un des états et un deuxième mode de modulation correspondant à l'autre état; et en ce que

la pièce à main comprend en outre des moyens (30, 31, 33, 34) pour démoduler la tension haute fréquence et fournir un signal logique (S_L), chaque niveau de ce signal étant représentatif d'un des deux modes de modulation, et un circuit logique d'inversion (41), alimenté par ledit circuit redresseur, recevant les signaux des capteurs et ledit signal représentatif des modes de modulation et fournissant au circuit logique de commande des signaux logiques (S_B, S'_B, S''_B) identiques aux signaux logiques des capteurs en réponse à un mode de modulation pour faire tourner le moteur dans un sens, et des signaux logiques inverses des signaux logiques des capteurs en réponse à l'autre mode de modulation pour faire tourner le moteur dans l'autre sens.

3. Dispositif selon la revendication 2, caractérisé en ce que la tension haute fréquence (V_C) est modulée en amplitude par un signal basse fréquence (S_{15}).

4. Dispositif selon la revendication 1 ou 2, caractérisé en ce que:

lesdits moyens pour sommer la tension haute fréquence à la tension continue réglable comprennent un transformateur de couplage (6) comportant un enroulement primaire (7) alimenté par le générateur haute fréquence, et un enroulement secondaire (8) dont une extrémité est reliée à l'un desdits conducteurs, la tension continue (V_A) étant appliquée entre l'autre extrémité de l'enroulement et l'autre conducteur (5'); et en ce que

lesdits moyens pour séparer la tension continue réglable de la tension haute fréquence comprennent un transformateur de séparation (21) dont une extrémité du primaire est reliée à l'un (5') desdits conducteurs, et un condensateur (20) dont une borne est connectée à l'autre extrémité du primaire et l'autre borne à l'autre conducteur (5), la tension haute fréquence apparaissant au secondaire du transformateur de séparation et la tension continue aux bornes du condensateur.

5. Dispositif selon la revendication 4, caractérisé en ce qu'une self saturable (9) est disposée en série dans l'un (5') desdits conducteurs dans le but de rendre l'amplitude de la tension haute fréquence (V_C) apparaissant au secondaire du transformateur de séparation (21) indépendante de l'intensité du courant continu circulant dans lesdits conducteurs (5, 5').

6. Dispositif selon l'une des revendications précédentes, caractérisé en ce que les capteurs (A, A', A'') sont des capteurs photoélectriques.

7. Dispositif selon l'une des revendications précédentes, caractérisé en ce que ladite alimentation (1) comporte un organe de commande permettant de varier la tension continue (V_A), la valeur de cette tension continue déterminant la vitesse de rotation du moteur.

8. Alimentation pour dispositif d'entraînement électrique d'un outil, caractérisé en ce qu'elle comprend:

une source de tension (2) fournissant une tension continue (V_A);

un générateur haute fréquence (3) fournissant une tension haute fréquence (V_C); et

des moyens (6) pour sommer la tension haute fréquence (V_C) à la tension continue (V_A) et appliquer la tension résultante à deux conducteurs (5, 5').

9. Alimentation selon la revendication 8, caractérisée en ce qu'elle comporte en outre:

des moyens (15, 16) pour moduler la tension haute fréquence (V_C); et

un organe de commutation (17) pour commander la modulation, ledit organe pouvant se trouver dans deux états, un premier mode de modulation correspondant à l'un desdits états et un deuxième mode de modulation correspondant à l'autre état.

10. Pièce à main pour dispositif d'entraînement électrique d'un outil, caractérisée en ce qu'elle comprend:

un moteur multiphasé sans collecteur comportant un rotor aimanté, ledit rotor étant agencé pour recevoir ledit outil;

des moyens pour recevoir de deux conducteurs (5, 5'), reliés à une alimentation, une tension formée par la sommation d'une tension haute fréquence (V_C) à une tension continue (V_A), et des moyens (20, 21) pour séparer ladite tension haute fréquence de ladite tension continue;

des capteurs (A, A', A'') commandés par le rotor et fournissant des signaux logiques (SA, S'_A, S''_A) représentatifs de la position angulaire du rotor;

un circuit logique de commande (50) fournissant des signaux de commande (S_N, S_P, ... S''_N, S''_P) en réponse aux signaux logiques délivrés par les capteurs;

un circuit d'attaque (60) du moteur recevant les signaux de commande et la tension continue (V_A) et fournissant un signal multiphasé (S_M, S'_M, S''_M) aux bornes (X, X', X'') du moteur pour le mettre en rotation; et

un circuit redresseur (23, 25, 26, 27, 28, 29) recevant la tension haute fréquence (V_C) et fournissant une tension continue (V_D) aux capteurs et auxdits circuits logique de commande et d'attaque.

11. Pièce à main selon la revendication 10, ladite pièce recevant desdits conducteurs (5, 5') une tension formée par la sommation d'une tension haute fréquence (V_C) modulée selon deux modes à la tension continue (V_A), caractérisée en ce qu'elle comporte en outre:

des moyens (30, 31, 33, 34) pour démoduler la tension haute fréquence (V_C) et fournir un signal logique (S_L), chaque niveau de ce signal logique étant représentatif d'un des deux modes de modulation, et

un circuit logique d'inversion (41), alimenté par la tension continue (V_D) fournie par le circuit redresseur, ledit circuit d'inversion recevant les signaux des capteurs et ledit signal représentatif des modes de modulation et fournissant au circuit logique de commande des signaux logiques (S_B, S'_B, S''_B) identiques aux signaux logiques des capteurs en réponse à un mode de modulation pour faire tourner le moteur dans un sens, et des signaux logiques inverses des signaux logiques des capteurs en réponse à l'autre mode de modulation pour faire tourner le moteur dans l'autre sens.

## Patentansprüche

1. Elektrische Antriebsvorrichtung, die dazu bestimmt ist, ein Werkzeug in Drehung zu versetzen, mit einer eine Gleichspannung (V_A) liefernden Speisequelle (1), einem Handstück, insbesondere zur Benutzung im zahnmedizinischen Bereich, in dem ein Elektromotor zum Antreiben des Werkzeugs und zwei verformbare elektrische Leiter (5, 5') angeordnet sind, die die Speisequelle mit dem Handstück verbinden, zum Speisen des Motors, dadurch gekennzeichnet, daß

die Speisequelle (1) außerdem einen Hochfrequenzgenerator (3) beinhaltet, der eine hochfrequente Spannung (V_C) erzeugt, sowie Einrichtungen (6) zum Summieren der hochfrequenten Spannung mit der Gleichspannung (V_A) und zum Anlegen der resultierenden Spannung an die beiden Leiter;

der Motor ein kollektorloser mehrfasiger Motor mit magnetischem Rotor ist; und

das Handstück ferner mit den beiden elektrischen Leitern (5, 5') verbundene Einrichtungen (20, 21) zum Trennen der Gleichspannung von der hochfrequenten Spannung, vom Rotor gesteuerte Fühler (A, A', A''), die für die Winkellage des Rotors representative logische Signale (S_A, S'_A, S''_A) liefern, eine logische Steuerschaltung (50), die auf die von den Fühlern gelieferten logischen Signale Steuersignale (S_N, S_P. ... S''_N, S''_P) liefert, eine Motor-Speiseschaltung (60), die die Steuersignale und die Gleichspannung emp   gt und den Klemmen (X, X', X'') des Motors ein mehrfasiges Signal (S_M, S'_M, S''_M) zuführt, um dies   n Drehung zu versetzen, und eine Gleichrichterschaltung (23, 25, 26, 27, 28, 29) umfaßt, die die hochfrequente Spannung empfängt und den Fühlern, der logischen Steuerschaltung und der Speiseschaltung eine Speise-Gleichspannung (V_D) zuführt.

2. Vorrichtung nach Anspruch 1, dadurch gekennzeichnet, daß

die Speisequelle ferner Einrichtungen (15, 16) zum Modulieren der hochfrequenten Spannung (V_C) und ein Schaltorgan (17) aufweist, das die Modulation steuert und sich in zwei Zuständen befinden kann, wobei eine erste Modulationsart einem der Zustände und eine zweite Modulationsart dem anderen Zustand entspricht; und

das Handstück ferner Einrichtungen (30, 31, 33, 34) zum Demodulieren der hochfrequenten Spannung und zum Liefern eines logischen Signals (S_L) umfaßt, wobei jedes Niveau dieses Signals für eine der beiden Modulationsarten representativ ist, und eine logische Inversionsschaltung (41) aufweist, die von der Gleichrichterschaltung gespeist ist und die Signale der Fühler und das die Modulationsarten wiedergebende Signal empfängt und der logischen Steuerschaltung logische Signale (S_B, S'_B, S''_B) zuführt, die mit den logischen Signalen der Fühler identisch sind, auf eine Modulationsart, um den Motor in einer Richtung zu drehen, und logische Signale, die zu den logischen Signalen der Fühler invers sind, auf den anderen Modulationsmodus, um den Motor in der anderen Richtung zu drehen.

3. Vorrichtung nach Anspruch 2, dadurch gekennzeichnet, daß die hochfrequente Spannung (V_C) durch ein niederfrequentes Signal (S_{15}) amplitudenmoduliert wird.

4. Vorrichtung nach Anspruch 1 oder 2, dadurch gekennzeichnet, daß

die Einrichtungen zum Summieren der hochfrequenten Spannung und der regelbaren Gleichspannung einen Koppeltransformator (6) mit einer vom Hochfrequenzgenerator gespeisten Primärwicklung (7) und einer Sekundärwicklung (8) aufweisen, deren eines Ende an einen der Leiter angeschlossen ist, wobei die Gleichspannung (V_A) dem anderen Ende der Wicklung und dem anderen Leiter (5') zugeführt wird; und

die Einrichtungen zum Trennen der regelbaren Gleichspannung und der hochfrequenten Spannung einen Trenntransformator (21), dessen Primärwicklung mit einem Ende an einen (5') der Leiter angeschlossen ist, und einen Kondensator (20) umfassen, dessen eine Klemme mit dem anderen Ende der Primärwicklung und dessen andere Klemme an den anderen Leiter (5) angeschlossen ist, wobei die hochfrequente Spannung an der Sekundärwicklung des Trenntransformators und die Gleichspannung an den Klemmen des Kondensators anliegt.

5. Vorrichtung nach Anspruch 4, gekennzeichnet durch eine mit einem (5') der Leiter in Reihe geschaltete sättigbare Drossel (9), die dazu dient, die Amplitude der hochfrequenten Spannung (V_C) an der Sekundärwicklung des Trenntransformators (21) unabhängig zu machen von der Stärke des Stroms in den Leitern (5, 5').

6. Vorrichtung nach einem der vorstehenden Ansprüche, dadurch gekennzeichnet, daß die Fühler (A, A', A'') photoelektrische Fühler sind.

7. Vorrichtung nach einem der vorstehenden Ansprüche, dadurch gekennzeichnet, daß die Speisequelle (1) ein Steuerorgan aufweist, das es ermöglicht, die Gleichspannung (V_A) zu variieren, wobei der Wert dieser Gleichspannung die Drehzahl des Motors bestimmt.

8. Speisequelle für eine elektrische Antriebsvorrichtung eines Werkzeugs, gekennzeichnet durch eine eine Gleichspannung ($V_A$) liefernde Spannungsquelle (2);
einen eine hochfrequente Spannung ($V_C$) liefernden Hochfrequenzgenerator (3) und
Einrichtungen zum Summieren der hochfrequenten Spannung ($V_C$) und der Gleichspannung ($V_A$) und zum Anlegen der resultierenden Spannung an zwei Leiter (5, 5').

9. Speisequelle nach Anspruch 8, ferner gekennzeichnet durch
Einrichtungen (15, 16) zum Modulieren der hochfrequenten Spannung ($V_C$) und
ein Schaltorgan (17) zum Steuern der Modulation, das sich in zwei Zuständen befinden kann, wobei eine erste Modulationsart einem und eine zweite Modulationsart dem anderen Zustand entspricht.

10. Handstück für eine elektrische Antriebsvorrichtung eines Werkzeugs, gekennzeichnet durch einen kollektorlosen Mehrphasenmotor mit magnetischem Rotor, der zur Aufnahme des Werkzeugs dient;
Einrichtungen zum Empfangen einer durch Summierung einer hochfrequenten Spannung ($V_C$) und einer Gleichspannung ($V_A$) erzeugten Spannung von zwei an eine Speisequelle angeschlossenen Leitern (5, 5') und Einrichtungen (20, 21) zum Trennen der hochfrequenten Spannung von der Gleichspannung;
durch den Rotor gesteuerte Fühler (A, A', A''), die die Winkellage des Rotors wiedergebende logische Signale ($S_A$, $S'_A$, $S''_A$) liefern;
eine logische Steuerschaltung (50), die auf von den Fühlern gelieferte logische Signale Steuersignale ($S_N$, $S_P$, ..., $S''_N$, $S''_P$) liefert;
eine Speiseschaltung (60) für den Motor, die die Steuersignale und die Gleichspannung ($V_A$) empfängt und den Klemmen (X, X', X'') des Motors ein mehrfasiges Signal ($S_M$; $S'_M$, $S''_M$) zuführt, um diesen in Drehung zu versetzen; und
eine Gleichrichterschaltung (23, 25, 26, 27, 28, 29), die die hochfrequente Spannung ($V_C$) empfängt und den Fühlern sowie der logischen Steuerschaltung und der Speiseschaltung eine Gleichspannung ($V_D$) zuführt.

11. Handstück nach Anspruch 10, das von den Leitern (5, 5') eine Spannung empfängt, die durch Summierung einer nach zwei Arten modulierten hochfrequenten Spannung ($V_C$) und einer Gleichspannung ($V_A$) erzeugt wird, ferner gekennzeichnet durch
Einrichtungen (30, 31, 33, 34) zum Demodulieren der hochfrequenten Spannung ($V_C$) und Liefern eines logischen Signals ($S_L$), wobei jedes Niveau dieses logischen Signals eine von zwei Modulationsarten darstellt, und
eine logische Inversionsschaltung (41), die von der von der Gleichrichterschaltung gelieferten Gleichspannung ($V_D$) gespeist wird und die Signale der Fühler und das die Modulationsarten wiedergebende Signal empfängt und der logischen Steuerschaltung logische Signale ($S_B$, $S'_B$, $S''_B$) zuführt, die bei einer Modulationsart mit den logischen Signalen der Fühler identisch sind, um den Motor in einer Richtung zu drehen und logische Signale, die bei der anderen Modulationsart zu den logischen Signalen der Fühler invers sind, um den Motor in der anderen Richtung zu drehen.

## Claims

1. An electrical arrangement for driving a rotary tool, comprising a source (1) of d.c. voltage ($V_A$), a handpiece, especially dental, with an electric motor for driving the tool, two deformable electric conductors (5, 5'), connecting the source to the handpiece, for feeding the motor, characterized in that
the source (1), comprises a high frequency generator (3) for supplying a high frequency voltage ($V_C$) and means (6) for summarizing a high frequency voltage on a d.c. voltage ($V_A$) and applying the resulting voltage to said conductors;
the motor is a brushless multi-phase motor having a magnetized rotor; and
the handpiece further comprises means (20, 21) connected to said two electrical conductors (5, 5') to separate the d.c. voltage from the high frequency voltage; sensors (A, A', A'') controlled by said rotor and generating logic signals ($S_A$, $S'_A$, $S''_A$) representative of the rotor's angular position; a logic control circuit (50) generating control signals ($S_N$, $S_P$, ... $S''_N$, $S''_P$) in response to logic signals generated by the sensors, a drive circuit (60) connected to the motor and receiving said control signals and said d.c. voltage and issuing a multi-phase signal ($S_M$, $S'_M$, $S''_M$) to the terminals (X, X', X'') of said motor to cause it to rotate and a rectifying circuit (23, 25, 26, 27, 28, 29) receiving said high frequency voltage and issuing a d.c. voltage ($V_D$) to the sensors, to the logic control circuit and to the drive circuit.

2. The arrangement, according to claim 1, characterized in that
said source further comprises means (15, 16) for modulating the high frequency voltage ($V_C$) and a switching member (17) for controlling the modulation, which member can be in one of two states, a first modulation mode corresponding to one of said states and the second modulation mode to the other one,
said handpiece further comprises means (30, 31, 33, 34) for demodulating the high frequency voltage and for generating a logic signal ($S_L$), each level of said signal being representative of one of two modulation modes, and a logic inverting circuit (41) supplied by the rectifying circuit and receiving the signals of the sensors and the signal representative of the modulation modes, and issuing to the logic control circuit logic signals ($S_B$, $S'_B$, $S''_B$) identical to the logic signals from the sensor in response to one

8

mode of modulation to cause the motor to rotate in one direction, and logic signals that are inverse to those from the sensors in response to the other mode of modulation to cause the motor to rotate in the opposite direction.

3. The arrangement, according to claim 2, characterized in that said high frequency voltage ($V_c$) is amplitude modulated by a low frequency signal ($S_{15}$).

4. The arrangement, according to claim 1 or 2, characterized in that said means for summarizing the high frequency voltage and said controllable d.c. voltage include a coupling transformer (6) having a primary winding (7) supplied by the high frequency generator, and a secondary winding (8) having one end connected to one of said two conductors, said d.c. voltage ($V_A$) being applied between the other end of the winding and the other conductor (5'); and

said means for separating said controllable d.c. voltage from said high frequency include a separation transformer (21) having one end of its primary winding connected to one (5') of said two conductors, and a capacitor (20) having one terminal connected to the other end of said primary winding and its other terminal connected to the second conductor (5), the high frequency voltage appearing at the secondary winding of the separation transformer and the d.c. voltage appearing at the terminals of the capacitor.

5. The arrangement according to claim 4, characterized in that a saturable self-inductance coil (9) is arranged in series in one (5') of said conductors to render the amplitude of the high frequency voltage ($V_c$) appearing on the secondary winding of said separation transformer (21) independent of the intensity of the direct current flowing through said two conductors (5, 5').

6. The arrangement according to any of the preceding claims, characterized in that said sensors (A, A', A'') are photoelectric.

7. The arrangement according to any of the preceding claims, characterized in that said source (1) includes a control member for varying said d.c. voltage ($V_A$), the value of said d.c. voltage determining the rotational speed of said motor.

8. Supply means for an electrical arrangement for driving a rotary tool, characterized by
a voltage source (2) supplying a d.c. voltage ($V_A$);
a high frequency generator (3) supplying a high frequency voltage ($V_c$); and
means (6) for summarizing said high frequency voltage ($V_c$) and said d.c. voltage ($V_A$) and applying the resulting voltage to said two conductors (5, 5').

9. Source according to claim 8, further characterized by
means (15, 16) for modulating said high frequency voltage ($V_c$); and
a switch member (17) for controlling the modulation, wherein said member can be in one of two states, the first modulation mode corresponding to one of said states and the second modulation mode to the other one.

10. A handpiece for an electrical arrangement for a tool, characterized by
a multi-phase brushless motor having a magnetized rotor, said rotor being adapted to receive said tool;
means for receiving from the two conductors (5, 5') connected to said source a voltage consisting of a high frequency voltage ($V_c$) summarized with a d.c. voltage and means (20, 21) for separating said frequency voltage from said d.c. voltage ($V_A$);
sensors (A, A', A'') controlled by said rotor and adapted to generate logic signals ($S_A$, $S'_A$, $S''_A$) representative of the rotor's angular position;
a logical control circuit (50) generating control signals ($S_N$, $S_P$, ... $S''_N$, $S''_P$) in response to logic signals generated by said sensors;
a drive circuit (60) of the motor receiving said control signals and said d.c. voltage ($V_A$) and issuing a multiphase signal ($S_M$, $S'_M$, $S''_M$) to the terminals (X, X', X'') of the motor to cause it to rotate; and
a rectifying circuit (23, 25, 26, 27, 28, 29) receiving said high frequency voltage ($V_c$) and issuing a d.c. voltage ($V_D$) to the sensors, to the logic control circuit and to the drive circuit.

11. The handpiece, according to claim 10, wherein said handpiece receives a voltage from said two conductors (5, 5') that is generated by summarizing a high frequency voltage ($V_c$) modulated in two modes on d.c. voltage ($V_A$), further characterized by
means (30, 31, 33, 34) for demodulating the high frequency voltage ($V_c$) and for generating a logic signal ($S_L$); each level of said signal being representative of one of the two modulation modes; and
a logic inverting circuit (41) being supplied with the d.c. voltage ($V_D$) from the rectifying circuit, receiving the signals generated by the sensors and the signal representative of the modulation modes, and issuing to the logic control circuit logic signals ($S_B$, $S'_B$, $S''_B$) identical to the logic signals from the sensor means in response to one mode of modulation to cause the motor to rotate in one direction, and logic signals opposite to those from the sensor means in response to the other mode of modulation to cause the motor to rotate in the opposite direction.

FIG. 1

FIG. 2

EP 0 254 215 B1